(19) Europäisches Patentamt
European Patent Office
Office européen des brevets

(11) **EP 0 763 789 B1**

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(51) Int Cl.⁶: **G05D 11/00**, G01N 27/40, G01N 27/406, G01N 27/417, C04B 35/52, C21D 1/74

(21) Anmeldenummer: **96114870.7**

(22) Anmeldetag: **14.09.1996**

(54) **Verfahren und Vorrichtung zur Messung und Regelung einer Aufkohlungs- und/oder Nitrieratmosphäre**

Method and apparatus for measuring and controlling a carbonizing and/or nitrifying atmosphere

Méthode et dispositif pour mesurer et réguler une atmosphère carbonisée et/ou nitrifiée

(84) Benannte Vertragsstaaten:
AT CH DE LI

(30) Priorität: **18.09.1995 DE 19534536**

(43) Veröffentlichungstag der Anmeldung:
**19.03.1997 Patentblatt 1997/12**

(73) Patentinhaber: **Göhring, Werner**
**47533 Kleve (DE)**

(72) Erfinder: **Göhring, Werner**
**47533 Kleve (DE)**

(74) Vertreter: **Stenger, Watzke & Ring Patentanwälte**
**Kaiser-Friedrich-Ring 70**
**40547 Düsseldorf (DE)**

(56) Entgegenhaltungen:
EP-A- 0 096 117          DE-A- 3 833 968
DE-A- 4 225 775

## Beschreibung

Die Erfindung betrifft ein Verfahren und eine Vorrichtung zur Messung und Regelung der Konzentration fester oder flüssiger Stoffe und/oder der übertragungseigenschaften einer Aufkohlungs- und/oder Nitrieratmosphäre zur Erzielung eines bestimmten Konzentrationsverlaufes des übertragenen Elementes in der Randschicht metallischer Werkstücke durch angepaßte Zufuhr von Kohlenwasserstoff, Luft, $O_2$, $CO_2$, $N_2O$, $N_2$ oder $NH_3$ in einen Ofenraum, wobei die zugeführte Menge eines oder mehrerer dieser Gase durch eine elektrische Meßgröße bestimmt wird, die zwischen den Elektroden einer in den Ofenraum eingebauten Meßzelle anliegt, deren eine Elektrode in einem Referenzmittel und deren andere Elektrode in der Atmosphäre angeordnet ist und letztere mit einem allseits von der Atmosphäre umgebenen ionenleitenden Festelektrolyten in Berührung steht.

Eine solche zur C-Pegel-Regelung von Aufkohlungsatmosphären benutzte Meßzelle ist in der Offenlegungsschrift DE 38 33 968 beschrieben. Sie entspricht auch dem technologischen Hintergrund dieser Erfindung. Die Erfindung bezieht sich jedoch allgemein auf Festelektrolyt-Meßzellen und schließt beispielsweise auch Stickstoff-Übertragungsatmosphären ein.

Es hat sich gezeigt, daß bei einer üblichen Bauart von Sauerstoff-Meßzellen immer noch ein langsames Driften der Meßspannung -meist nach oben- erfolgt (siehe Zeitschrift HTM 49 (1994) 2 S. 90). Bei der Regelung der Atmosphären ist daher in gewissen Zeitabständen eine Kontrolle des Meßwertes und eine Anpassung der daraus berechneten Gleichgewichtskonzentration (C-Pegel) an den tatsächlichen Wert mit einem Korrekturfaktor nötig.

Es wurde erkannt, daß eine im Laufe der Zeit immer höher werdende Spannung der Sauerstoff-Meßzellen auf einer katalytischen Wirkung von atomarem Sauerstoff auf den Atmosphären-Bestandteil $CH_4$ beruht. An der Elektrode ist atomarer Sauerstoff vorhanden, der als starker Elektronenakzeptor die Spaltung von $CH_4$ katalysiert. Das zerfallende $CH_4$ reagiert mit Sauerstoff und bewirkt in Elektrodennähe einen niedrigeren Sauerstoffpartialdruck als an den Werkstücken im Ofenraum.

In den Berührungsbereichen des Elektrolyten mit den Elektroden laufen zwei prinzipiell verschiedene Reaktionen ab:

Die dem Meßprinzip entsprechende **Austauschreaktion** zwischen den Leerstellen im Elektrolyten $[V_{\ddot{O}}]$ und den Sauerstoffionen an den beiden Elektrolytoberflächen $O^{--}_{(O)}$. Letztere stehen wiederum im Austausch mit den Sauerstoffionen an den Elektroden $O^{--}_{(E)}$. Dort stellt sich das elektrochemische Gleichgewicht zwischen Ionen, Atomen und Elektronen ein.

$$[V_{\ddot{O}}] \overset{\leftarrow}{\rightarrow} O^{--}_{(O)} \overset{\leftarrow}{\rightarrow} O^{--}_{(E)} \overset{\leftarrow}{\rightarrow} O_{(E)} \overset{\leftarrow}{\rightarrow} 2e_{(E)}$$

Die **Störreaktionen**

$$CH_4 + O^{--}_{(Referenz)} \rightarrow CO + 2H_2 + 2e$$

oder

$$H_2 + O^{--}_{(Referenz)} \rightarrow H_2O + 2e$$

entsprechen den Vorgängen an einer Brennstoffzelle. Vom Referenzmittel durch den Elektrolyten wandernde Sauerstoffionen reagieren mit der Atmosphäre. Es findet ein stetiger Ionentransport durch den Elektrolyten statt.

Neue Meßzellen zeigen meist richtig an. Mit zunehmender Betriebsdauer wird die Anzeige fehlerhaft. Eine mögliche Ursache ist eine allmähliche Erhöhung der katalytischen Aktivität der Elektrode in der Referenzluft. Es entsteht ein stärkerer "Einbaudruck" der Sauerstoffionen in den Elektrolyten, der sich als "Ausbaudruck" an die Atmosphärenseite des Elektrolyten überträgt. Die Folge davon ist eine verbesserte Reaktionsbereitschaft der Ionen mit der Atmosphäre. Wenn jedoch bei offenem Meßstromkreis Sauerstoffionen aus dem Elektrolyten austreten, dann reagieren sie beim Aufkohlen meist mit $CH_4$-Spaltprodukten oder $C_{ad}$ und bilden CO. Dadurch wird das Sauerstoffpotential geringer und bewirkt einen Anstieg der Meßzellenspannung. Beim Abkohlen weist die Atmosphäre einen geringeren $CH_4$-Anteil auf. Die vom Referenzmittel herkommenden Sauerstoffionen reagieren dann vorwiegend mit $H_2$ zu $H_2O$ oder mit CO zu $CO_2$. Dabei entsteht ein Abfall der Meßzellenspannung.

Die beschriebene Veränderung an der Meßzelle verursacht das Driften der Störreaktionen. Die Stärke der Verfälschung des Meßergebnisses wird jedoch durch den Grad der Elektronenteilleitfähigkeit des Elektrolyt-Werkstoffes bestimmt. Am offenen Stromkreis kommt der Ionenstrom durch den Elektrolyten nur in dem Maße zustande, wie aus Gleichgewichtsgründen Elektronen durch den Elektrolyten wieder zur Elektrode im Referenzmittel zurückwandern

EP 0 763 789 B1

können. Die durch den Elektrolyten geförderten Sauerstoffionen treten als Sauerstoffatome aus uns verfälschen das chemische Potential an der Meßelektrode. Das gemessene falsche Potential läßt sich schlecht korrigieren. Ziel der Erfindung ist es, unverfälschte Elektrodenpotentiale richtig zu messen.

Ein weiterer Nachteil der bekannten Meßzellen ist, daß -infolge der meist hohen chemischen Triebkraft zwischen der Atmosphäre und dem Referenzmittel- nur eine entsprechend geringe Elektronenteilleitfähigkeit des Elektrolytwerkstoffes zulässig ist. Das ist ein wichtiger Grund, weswegen z. Zt. nur wenige Festelektrolytsorten in Meßzellen Anwendung finden können.

Eine Aufgabe der Erfindung ist es, die Vorgänge an der Meßzelle dem Geschehen an der Werkstückoberfläche anzupassen, um dadurch die Messung der Gleichgewichtskonzentration der Atmosphäre im Dauerbetrieb zu verbessern und außerdem auch die Einflußgröße der Stoffübertragungsgeschwindigkeit zu erfassen. Dabei ergibt sich im Rahmen dieser Anpassung die weitergehende Aufgabe, eine Vorrichtung zur Erhöhung der Betriebssicherheit und zur Erweiterung der Meßmöglichkeiten zu schaffen, bei der die Unzulänglichkeiten der fur die Meßzellen zur Verfügung stehenden Baustoffe möglichst wenig zur Geltung kommen.

Die Lösung der Aufgabe erfolgt durch den in Anspruch 1 beschriebenen Verfahrensschritt, der die ionenleitende Verbindung zwischen der Referenz-Elektrode und der Atmosphären-Elektrode unterbricht. An der elektronenleitenden Trennwand in der Atmosphäre endet die Diffusionsmöglichkeit der Ionen infolge der chemischen Triebkraft. An den Berührungsstellen des in der Atmosphäre angeordneten Elektrolyten mit der metallischen Trennwand und mit der Meßelektrode stellt sich das elektrochemische Gleichgewicht nur zwischen Atomen der Atmosphäre und Elektronen ein. Die Meßelektrode ist durch diesen Verfahrensschritt vollständig vom Zustrom von Ionen abgeschirmt, die vom Referenzmittel herkommen können. Die an der Elektrode in der Atmosphäre zum Betrieb des Meßgerätes zerfallenden Ionen wurden zuvor in der Atmosphäre gebildet. Die Ionensperre vermeidet einerseits die vorbeschriebene Verfälschung der Potentiale an der Elektrode in der Atmosphäre. Andererseits ist sie Voraussetzung für die Eignung der Zelle zu Messungen der Übertragungsgeschwindigkeit und zur Anwendung von Elektrolyten, die verschiedene Ionensorten leiten.

In Anspruch 2 ist die Ausführung der Meßzelle mit Elektrolyten erhöhter Elektronenteilleitfähigkeit beschrieben. Sowohl in der Atmosphäre als auch im Referenzmittel sind die Elektroden an separaten Festelektrolyten angeordnet, die wiederum mit elektronenleitenden Trennwänden in Berührung stehen. Letztere sind dann mit dem Festelektrolyten verbunden, der die Atmosphäre vom Referenzmittel trennt. Diese Anordnung vermeidet neben der vorbeschriebenen Verfälschung der Potentiale an der Atmosphären-Elektrode auch die Verfälschung des elektrischen und chemischen Potentials an der Referenzelektrode. Letztere macht sich bei einem erhöhten Ionendurchgang durch die Meßzelle bemerkbar.

In Anspruch 3 ist eine Ausführungsform der Erfindung beschrieben, bei der die Ionen nicht der chemischen Triebkraft zwischen Atmosphäre und Referenzmittel ausgesetzt sind. Die Meßzelle wird durch Teilung der in Anspruch 1 beschriebenen Trennwand und Nutzung derselben als Gehäuse für zwei prinzipiell gleiche Bauteile ausgeführt. Der eine Bauteil enthält einen Elektrolyten, der allseits von der Atmosphäre umgeben ist und der andere Bauteil einen Elektrolyten, der allseits vom Referenzmittel umgeben ist. Der letztgenannte Bauteil kann für mehrere bei gleicher Temperatur befindliche Meßzellen benützt werden. Die elektronenleitende Verbindung der beiden Trennwand-Bauteile erfolgt über ein Gerat, das Elektronen nur in einer Richtung fördert. Für Konzentrationsmessungen ist dazu eine im elektrochemischen Gleichgewicht befindliche galvanische Spannungsquelle erforderlich. Sie kann für mehrere Meßzellen -unabhängig von der Art der Ionenleiter und deren Temperatur- benutzt werden. Eine andere Möglichkeit ist der Elektronentransport über einen elektronischen Baustein -z.B. eine Elektronenröhre-, der Elektronen nur dann fördert, wenn über ein Spannungsmeßgerät ein Strom fließt. Eine als Gleichspannungsquelle umgewandelte Netzspannung ist zur Messung der Übertragungsgeschwindigkeit besonders geeignet.

Nach Anspruch 4 dient die Spannungsmessung zwischen den beiden Elektroden der Meßzelle zur fehlerfreien Ermittlung der Gleichgewichtskonzentration der Atmosphäre mit der Werkstückoberfläche (C-Pegel oder N-Potential). Der wichtigste Vorteil einer solchen Meßzelle liegt in der richtigen Messung des Sauerstoffpotentials in einer stark $CH_4$-haltiger Aufkohlungsatmosphäre. Eine solche Atmosphäre übt eine starke Reduzierwirkung auf adsorbierte Sauerstoffatome aus. Dies beschleunigt einerseits die Aufkohlungsgeschwindigkeit, fordert jedoch andererseits die beschriebenen Störreaktionen.

Nach Anspruch 5 dient die Messung der elektrischen Stromstärke -bei Stromfluß zwischen den beiden Elektroden- zur Ermittlung der Übertragungsgeschwindigkeit der Atmosphäre auf die Werkstückoberfläche. Die Kohlenstoffübertragung an der Werkstückoberfläche erfolgt nach folgendem Reaktionsschema:

$$CO_{ad} \rightarrow C_{ad} + O_{ad}$$

Bekanntlich ist der Abtransport des adsorbierten Sauerstoffs von der Werkstückoberfläche der geschwindigkeitsbestimmende Teilschritt der Kohlenstoffübertragung. Bei Anwendung eines Sauerstoffionen leitenden Festelektrolyten

3

in der erfindungsgemäßen Meßzelle, entspricht die Stärke des Stromflusses zwischen den beiden Elektroden der Transportgeschwindigkeit des Sauerstoffes. Der Stromfluß wird u.a. durch die Konzentration und die Spalteigenschaften von CO sowie durch die Sauerstoffionen-Bildungs- und Zerfalls-Eigenschaften der Atmosphäre an der Elektrode und der Trennwand hervorgerufen. Die Einbauintensität der Ionen in den Elektrolyten wird vorwiegend durch den CO-Gehalt der Atmosphäre bestimmt; die Ausbauintensität hauptsächlich durch die Reduzierwirkung von $CH_4$-Spaltprodukten und $H_2$. Dieser Vorgang entspricht prinzipiell der Platzwechselzahl des adsorbierten Sauerstoffs an der Werkstückoberfläche. Da sehr wenig Sauerstoff des gespaltenen CO in die Werkstückoberfläche eindringt, kennzeichnet der O-Platzwechsel auch die Aufkohlungsgeschwindigkeit. Die gemessene Stromstärke [µA] ist somit proportional zur Transportgeschwindigkeit des Kohlenstoffs [mol/s].

Der vorbeschriebene Stromfluß wird vom Aufkohlungsgrad der Elektrode beeinflußt. Es ist daher zweckmäßig, nicht aufkohlende Elektrodenwerkstoffe -wie Edelmetalle- anzuwenden. Damit unterliegt die gemessene Aufkohlungsgeschwindigkeit der Atmosphäre keinen Veränderungen durch eine Aufkohlung der Meßstelle.

Für gelegentliche Messungen des Übertragungsverhaltens bei fortschreitender Aufkohlung kann man die Elektrode und die Berührungsstelle mit der Trennwand in der Atmosphäre -anstelle der üblichen Edelmetalle- aus demselben Werkstoff wie die Werkstücke ausführen. Sie müssen dann bei jeder Übertragungs-Charge erneuert werden. Auf diese Weise lassen sich auch werkstoffabhängige Einflüsse auf die Aufkohlungsgeschwindigkeit ermitteln. Sie werden jedoch zweckmäßigerweise nur einmal gemessen und dann in das Berechnungsprogramm des C-oder N-Profils übernommen.

Bei der Messung des Übertragungsverhaltens der Atmosphäre fließen an den vier bzw. sechs in Reihe geschalteten Berührungsflächen Metall/ Elektrolyt gleich große Elektronen- bzw. Ionenströme. Die Anordnung des im Referenzmittel liegenden Festelektrolyten hat hierbei die Aufgabe, die anliegende Spannung der Konzentrationsdifferenz (C-Pegel) proportional zu halten. Der besondere Vorteil der Anwendung eines Referenzmittels bei einer derartigen Messung dürfte bei Atmosphären liegen, deren Gleichgewichtskonzentration ebenfalls geregelt ist. Das ist beispielsweise bei Aufkohlungsatmosphären der Fall.

Der Stromfluß durch die Meßzelle hängt von mehreren sich ändernden Einflüssen ab, z.B. von der Größe der Berührungsfläche zwischen Elektrode und Elektrolyt oder von Vergiftungserscheinungen an den Elektroden. Die absolute Höhe des Stromflusses spielt bei der Überprüfung der Übertragungseigenschaften einer Atmosphäre durch Personen keine Rolle. Zum Auffinden oder Aufrechterhalten der bestgeeigneten Gasmengen dient der Maximalwert der µA-Messung. Für eine automatische Regelung des Meßwertes oder zur Benützung des Wertes zur Berechnung der Konzentration des übertragenen Stoffes in der Randschicht der Werkstücke ist jedoch eine Justierung bzw. Eichung des Meßwertes in die in Abhängigkeit zum Stromfluß sich ändernden Größen [$gC/(cm^2{*}s)$] bzw. [$gN/(cm^2{*}s)$] erforderlich.

In Anspruch 6 ist eine Justierung des Meßwertes beschrieben. Dazu wird eine Justierspannung angelegt und die Meßzelle anstelle der Atmosphäre mit einem gleichbleibenden Justiergas (z.B. Luft) beaufschlagt. Dabei stellt sich ein Stromfluß ein, der unabhängig von der Übertragungsgeschwindigkeit der Atmosphäre ist. Verändert sich der Stromfluß von Justierung zu Justierung, so ist dies auf vorbeschriebene Einflüsse der Meßzelle zurückzuführen. Anhand der Veränderung des Justier-Stromflusses wird der Meßwert der Übertragungsgeschwindigkeit berichtigt. Diese Umrechnung des aktuellen Stromflusses auf einen festgelegten Vergleichszustand ist einfach -ggf. automatisch- zu bewirken. Hiermit läßt sich eine stets gleichbleibende Stoffübertragung bei einem µA-Sollwert reproduzierbar herbeiführen, ohne daß dazu die absolute Höhe der Übertragungswerte bekannt sein muß.

Bei der Regelung einer Atmosphäre wird die Übertragungsgeschwindigkeit erhöht, wenn Stoffe in den Ofenraum eingeführt werden, die die Spaltung von $CH_4$ und $NH_3$ fördern. Das sind elektronenakzeptierende Lewis-Säuren, z.B. $CO_2$ oder Sauerstoffatome, die sich aus Luft, $O_2$ oder $N_2O$ im heißen Ofenraum abspalten. Eine hohe Übertragungsgeschwindigkeit der Atmosphäre wird nicht nur aus wirtschaftlichen Gründen angestrebt. Sie fördert auch die Gleichmäßigkeit der Stoffübertragung an allen Stellen des Werkstückes und an allen Werkstücken innerhalb einer Charge.

Die Übertragungsgeschwindigkeit unterliegt einer Vielzahl schlecht abzuschätzender Einflüsse, z.B. in den Ofenraum eingeschleppte Fremdstoffe oder Oxydations- / Reduktionsvorgänge von Charge oder Ofenauskleidung. Die erfindungsgemäße erstmalige Möglichkeit der kontinuierlichen Messung und Regelung der Übertragungsgeschwifidigkeit gestattet daher eine wesentliche Verbesserung der Qualität und Berechenbarkeit der Stoffübertragung.

Bei der Stickstoffübertragung ist nach Literaturangaben der Abtransport des an der Werkstückoberfläche adsorbierten Sauerstoffs ebenfalls ein wichtiger Schritt des Übertragungsvorganges. In sauerstoffhaltigen Nitrieratmosphären ist die Transportgeschwindigkeit des Sauerstoffs nach dem Bodenstein-Prinzip auch für die Stickstoff-Übertragungsgeschwindigkeit aussagefähig.

Nach Anspruch 7 kann die Messung der Gleichgewichtskonzentration und der Übertragungsgeschwindigkeit in zeitlicher Folge mit derselben Meßzelle erfolgen. Hierbei ist es zweckmäßig, zur Messung der Übertragungsgeschwindigkeit eine Meßzelle nach Anspruch 11 mit einer Netz-Triebspannungsquelle anzuwenden. Bei der anschließenden Konzentrationsmessung mit einer anderen Triebspannungsquelle ist dann nur eine kurze Wartezeit bis zur Einstellung des elektrochemischen Gleichgewichtes nötig. Bei der Anwendung von Sauerstoffionenleitern tritt eine vorteilhafte Begleiterscheinung dieser kombinierten Messung auf. Die bei der Übertragungsmessung geförderten Sauerstoffionen halten bei der Zerfallsreaktion die Elektrode rußfrei.

Nach Anspruch 8 kann zur Messung der Übertragungsgeschwindigkeit und der Gleichgewichtskonzentration die Meßzelle mit mehreren Elektrolyten ausgerüstet werden, die unterschiedliche Ionensorten leiten. Es ist möglich, daß N- oder C-Ionenleiter im Referenzmittel eine zu hohe Elektronenteilleitfähigkeit aufweisen oder daß sie aus anderen Gründen nicht geeignet sind. Dann kann auf das bewährte Referenzmittel Luft und als Elektrolyt auf Sauerstoffionen leitendes Zirkondioxyd zurückgegriffen werden.

In den Ansprüchen 9 und 10 sind die Vorrichtungen beschrieben.

Nach Anspruch 11 wird vorgeschlagen, als Triebkraft eine elektrische Gleichspannungsquelle anzuwenden. Sie kann bei einigen Anwendungsfällen dem Netz entnommen werden. über die Höhe der Spannung bzw. einen Widerstand kann erstmals die Triebkraft der Ionen eingestellt werden. Eine Netz-Triebspannungsguelle ist apparativ sehr einfach und eignet sich gut zur Messung der Übertragungsgeschwindigkeit über den Stromfluß zwischen den Elektroden. Auch zur Regelung von Plasmaöfen ist eine solche Triebspannungsquelle zweckmäßig.

Nach Anspruch 12 wird vorgeschlagen, als Triebspannungsquelle eine galvanische Zelle (Festelektrolytzelle) anzuwenden, die sich im elektrochemischen Gleichgewicht befindet. Das kann eine in der Kraftfahrzeugtechnik angewandte Lambda-Sonde sein. Die Triebspannungsquelle kann auch eine durch Ionendurchgang verfälschte Spannung aufweisen. Sie wird in der Gesamtmeßzelle berichtigt. Die Spannung der erfindungsgemäßen Meßzelle entspricht den thermodynamischen Daten.

Nach Anspruch 13 wird vorgeschlagen, anstelle einer Triebspannungsquelle einen elektronischen Baustein -z.B- eine Elektronenröhre- anzuwenden, der Elektronen nur dann fördert, wenn diese zum Betrieb des Spannungsmeßgerätes fließen.

Nach Anspruch 14 werden Meßzellen für Stoffe vorgeschlagen, für die es keine Elektrolyte mit guter Ionenleitfähigkeit und geringer Elektronenteilleitfähigkeit gibt. In den erfindungsgemäßen Meßzellen können auch Elektrolyte mit hoher Elektronenteilleitfähigkeit benutzt werden, wenn sie kombiniert mit einem Ionenleiter mit geringer Elektronenteilleitfähigkeit eingesetzt werden. Wenn einer der beiden Elektrolyte Elektronenteilleitfähigkeit aufweist, erfolgt an diesem ein elektrischer Potentialausgleich. Ein störender Ionenfluß kommt nur zustande, wenn die Elektronen auch durch den anderen Elektrolyten rückströmen können. Die Anforderungen an einen der beiden Elektrolyten sind somit sehr gering.

Nach Anspruch 15 wird vorgeschlagen, die gasberührten Oberflächen der Elektrolyte teilweise mit einer elektrisch nicht leitenden Schicht zu versehen. An den Oberflächen der Elektrolyte (4) und (7) befinden sich elektrische Ladungsträger. Kurzschlüsse zwischen den elektrischen Potentialen an den metallischen Berührungestellen (1) und (8) bzw. (5) und (10) durch Oberflächenleitung müssen verhindert werden.

Die Erfindung wird anhand der Zeichnungen erläutert:

Fig. 1    zeigt das Verfahrensschema der Erfindung zur fehlerfreien Potentialbildung an der Atmosphärenelektrode.
Fig. 2    zeigt das Verfahrensschema der neuen Meßzelle.
Fig. 3    zeigt die Vorrichtung einer konventionellen Meßzelle in einer Ausführung mit zwei Ionensperren.
Fig. 4    zeigt die Vorrichtung der neuen Meßzelle mit einer galvanischen Triebspannungsquelle.
Fig. 5    zeigt die Vorrichtung der neuen Meßzelle mit einer Netz-Triebspannungsquelle.
Fig. 6    zeigt die durch Ionendurchgang entstehenden elektrischen Potentialdifferenzen in einer Meßzelle.
Fig. 7    zeigt die elektrischen Potentiale einer Meßzelle mit zwei Elektrolyten geringer Elektronenleitung.
Fig. 8    zeigt die elektrischen Potentiale an einer $N_2$-Meßzelle mit Elektrolyten unterschiedlicher Elektronenleitfähigkeit.

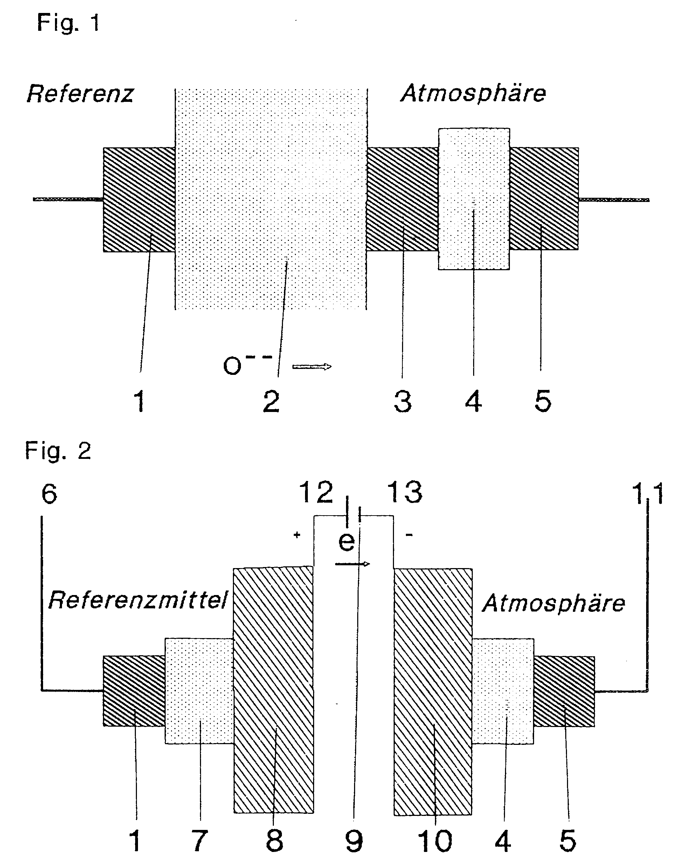

In den Figuren 1 bis 5 sind folgende gleiche Bauteile:

Die Elektrode an der Referenzseite (1),
der allseits von der Atmosphäre umgebene Festelektrolyt (4) und die Elektrode in der Atmosphäre (5).

Bei Berührung der Elektroden (1) und (5) mit den Sauerstoffionen-Leerstellen des Elektrolytwerkstoffes treten an den Elektroden unterschiedliche elektrische Einzelpotentiale auf. Zur Messung der Differenz dieser Einzelpotentiale ist nach dem Stand der Technik ein Meßkreis erforderlich, in dem ein Strom fließen muß. Bei der bekannten Bauweise (Fig. 1) dient dazu der durch den Elektrolyt (2) in einer Richtung fließende Ionenstrom. Bei der neuen Bauweise (Fig. 2) bildet der durch Bauteil (9) in einer Richtung geführte Elektronenstrom den notwendigen Meßkreis. Bei der konventionellen Bauweise erfolgt die Unterbrechung des Sauerstoff-Ionenstromes an der Ionensperre (3). Bei der neuen Bauweise werden die Ionen nicht durch die unterschiedlichen chemischen Potentiale angetrieben. Die notwendige Triebkraft bewirkt eine teils veränderbare elektrische Spannung.

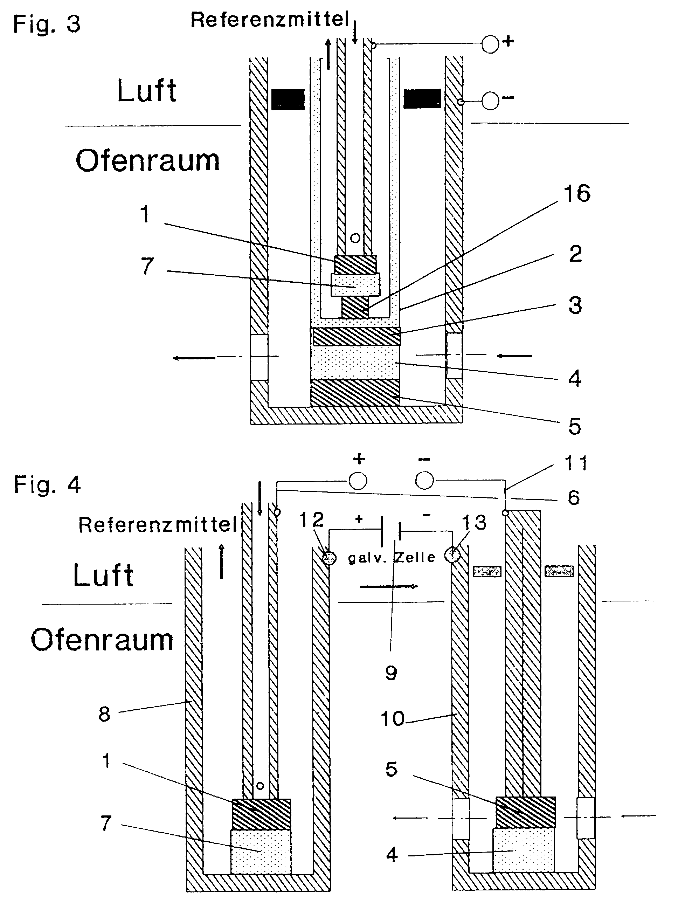

Fig. 3 zeigt die Vorrichtung einer konventionellen Meßzelle, die mit Elektrolyten erhöhter Elektronenteilleitfähigkeit arbeitet. Sie ist im Vorrichtungsanspruch 9 erläutert. Der Unterschied zur bekannten Vorrichtung besteht in der Anordnung der beiden metallischen Ionensperren (3) und (16). An den Elektrolyten (4) und (7) herrscht jeweils eine sehr geringe elektrische Potentialdifferenz, die auch bei relativ leitfähigem Elektrolytwerkstoff keinen bemerkbaren Elektronenrückstrom zuläßt.

Fig. 4 zeigt die Vorrichtung der neuen Festelektrolyt-Meßzelle. Sie ist in den Vorrichtungsansprüchen 10 und 12 erläutert. Hierbei sind zwei Einbaustellen in den Ofenraum vorgesehen. Die beiden Bauteile (8) und (10) sind zueinander elektrisch isoliert in den Ofenraum eingebaut. Benutzt man als Triebkraft eine galvanische Zelle, z.B. die Spannung einer Lambda-Sonde zur Abgasmessung an Kraftfahrzeugen oder einer anderen durch Ionendurchgang falsch anzeigenden Festelektrolyt-Meßzelle, dann liefert die Gesamtmeßzelle nach Anspruch 12 berichtigte Meßwerte.

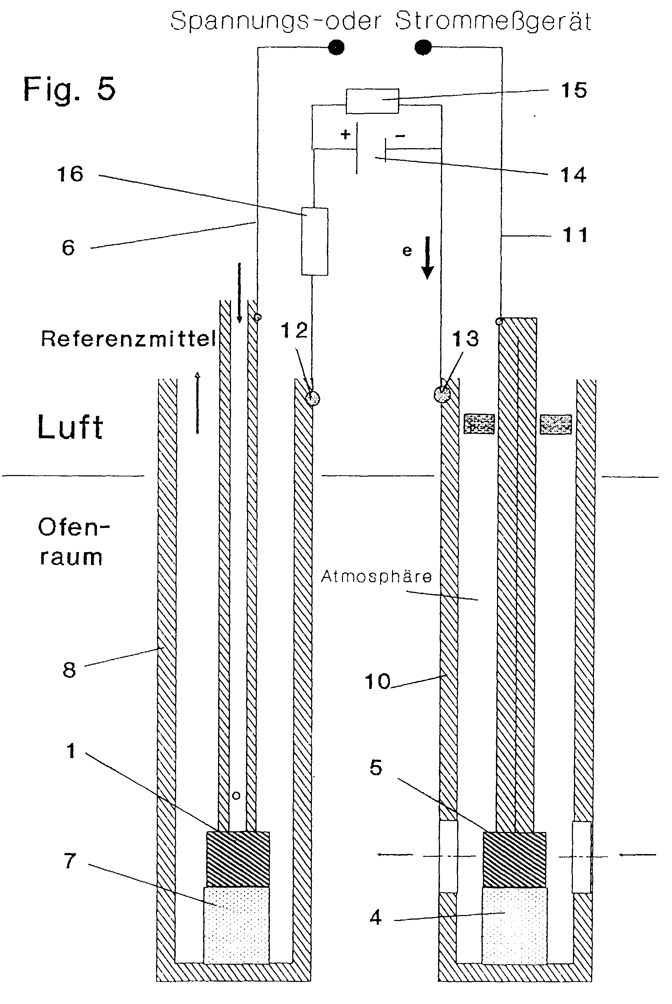

Fig. 5 zeigt die Vorrichtung der neuen Festelektrolyt-Meßzelle nach den Ansprüchen 10 und 11. Die Netz-Triebspannungsquelle (14) ist über Widerstand (15) einstellbar. Außerdem läßt sich über Widerstand (16) der innere Gesamtwiderstand bzw. der Kurzschlußstrom der Meßzelle einstellen. Es ist ein Vorteil dieser Ausführungsform, daß man die Triebkraft der Ionen mit Hilfe der beiden Widerstände der Elektronenteilleitfähigkeit und der Ionenleitfähigkeit des Elektrolytwerkstoffes anpassen kann. Das macht z.B. Messungen bei niedrigeren Temperaturen möglich, als dies mit konventionellen Meßzellen der Fall ist.

Nachfolgend wird untersucht, unter welchen Bedingungen die Spannung E der Meßzelle den thermodynamischen Daten entspricht. Diese Spannung setzt sich aus zwei an den Elektroden entstehenden Teilspannungen zusammen. Nach der Literatur ist eine Voraussetzung für deren repräsentative Addierung ein gleiches elektrochemisches Potential der Sauerstoffionen $\eta_o^{--}$ (Summe von chemischem Potential der Sauerstoffionen $\mu_o^{--}$ und elektrischem Potential $\varphi$) im Elektrolyten. Dann entspricht die elektrische Potentialdifferenz an den Elektroden den thermodynamischen Daten. Diese Forderung ist erfüllt, wenn Elektrolyte mit guter Ionenleitfähigkeit und gleicher Anzahl von Ionen-Leerstellen angewandt werden.

An den erfindungsgemäßen Meßzellen treten gegenüber dem Inneren der Elektrolyte veränderte elektrische Oberflächenpotentiale $\Delta\varphi$ auf. Dies ist auch bei bekannten Meßzellen der Fall. wenn ein Fremdpotential -z.B. Masse- an einer Elektrode anliegt. Bis zum Ladungsausgleich wird dadurch ein Ionenübergang ausgelöst. Danach nehmen die übergetretenen Ionen mit der Umgebung ein Gleichgewicht an. Bleibend verändern sich dabei nur die elektrischen Oberflächenpotentiale. Gleiche elektrische Oberflächenpotentiale heben sich bei der Messung der Potentialdifferenz heraus und man braucht sie daher nicht zu beachten.

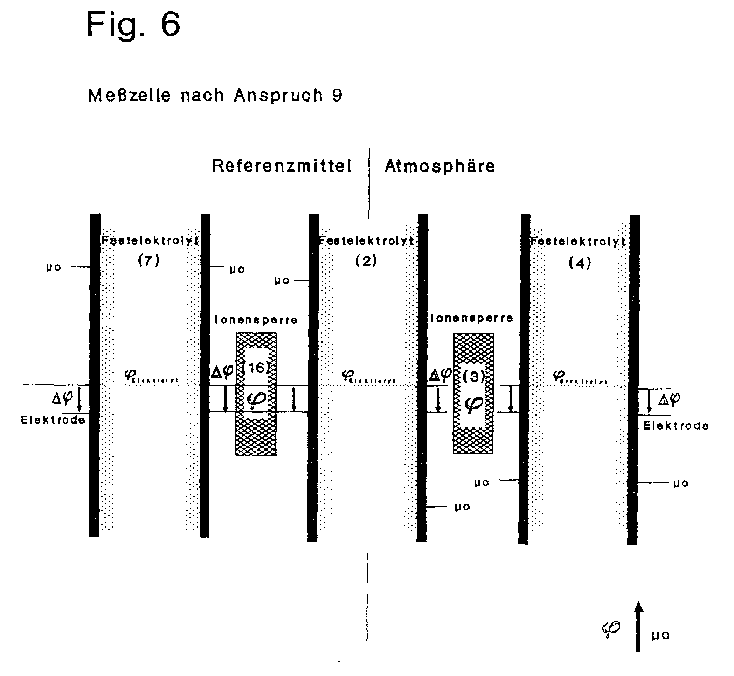

Fig. 6 ist repräsentativ für alle Meßzellen, die gleiche $\eta_o^{--}$-Werte annehmen können. Das ist bei den Meßzellen nach den Ansprüchen 9, 12 und sinngemäß auch 14 der Fall. Die vom Innern der Elektrolyte abweichenden elektrischen Oberflächenpotentiale werden bei Vorhandensein einer Störreaktion durch die unterschiedlichen Sauerstoffpotentiale $\mu_o$ an den Elektrolyten (2) und (4) ausgelöst. Die metallische Trennwand kann jedoch als Mittelwert nur ein einziges elektrisches Potential $\varphi$ annehmen. Dieser gleiche Wert überträgt sich auf die Elektroden. Die Spannung der Meßzelle entspricht daher den thermodynamischen Daten.

Bei Meßzellen nach Anspruch 12 ist zwischen den Gehäusen (8) und (10) eine galvanische Triebspannungsquelle angeordnet, in der elektrochemisches Gleichgewicht herrscht. Dieses Gleichgewicht überträgt sich über die Triebspannungsquelle auf die Gesamtmeßzelle, Die an den Elektrolytoberflächen entstehenden elektrischen Potentialsprünge $\Delta\varphi$ sind -wie in Fig. 6 dargestellt- alle gleich groß.

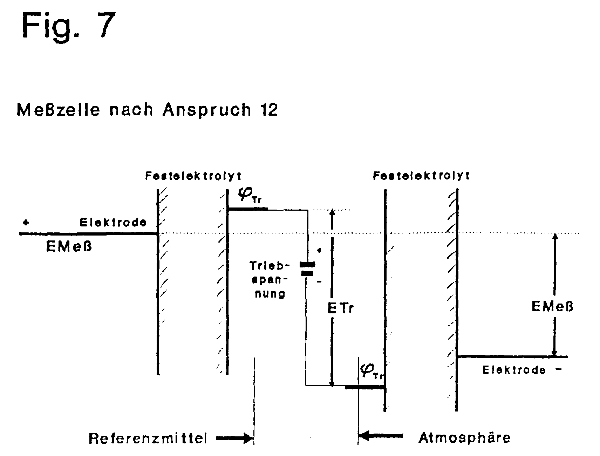

Fig. 7 zeigt die Lage der elektrischen Potentiale und die kennzeichnenden Spannungen E bei einer Meßzelle nach Anspruch 12 mit einer galvanischen Triebspannungsquelle. Sie ist charakteristisch für Meßzellen, bei denen beide Elektrolyte eine niedrige Elektronenteilleitfähigkeit aufweisen.

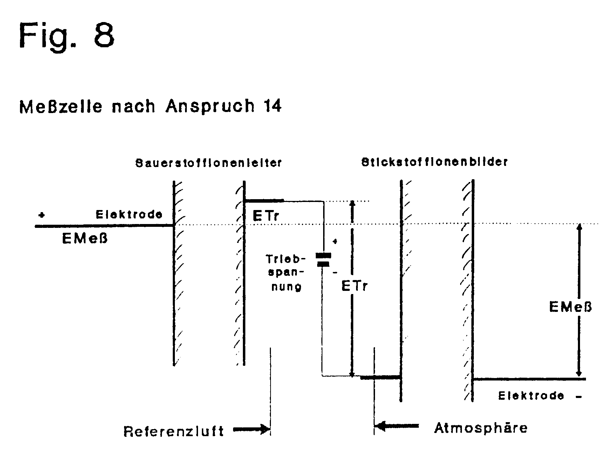

Fig. 8 zeigt die elektrischen Potentiale bei einer bevorzugten Meßzelle für das Stickstoffpotential nach Anspruch 14. Bekannte Stickstoffionenleiter haben fur konventionelle Meßzellen eine zu geringe Ionenleitfähigkeit und eine zu hohe Elektronenteilleitfähigkeit. Bei vorgenannter Meßzelle ist am Stickstoffionenleiter -wie vorbeschrieben- ein elektrischer Potentialausgleich zulässig, da in der Referenzluft ein Sauerstoffionenleiter mit geringer- Elektronenteilleitfähigkeit benützt wird. Im Prinzip genügt ein leitfähiger Stickstoffionenbilder. Die Spannung der Meßzelle entspricht bei galvanischer Triebspannungsquelle den thermodynamischen Daten. Dazu müssen das Sauerstoffpotential der Luft auf deren Stickstoffpotential umgerechnet werden und evtl. unterschiedliche Stöchiometriefaktoren der Elektrolyte berücksichtigt werden. Bei einer dementsprechenden Kombination für Kohlenstoffionenleiter kann $CO_2$ als Referenzmittel dienen.

Die erheblichen Vorteile einer mit zwei Elektrolyt-Tabletten ausgerüsteten Meßzelle nach Anspruch 3 liegen im einfachen Aufbau und der Betriebssicherheit einer solchen Meßzelle. Außerdem wirken sich die Unzulänglichkeiten der zur Verfügung stehenden Baustoffe weniger aus. Dadurch bedingte Meßfehler können festgestellt und automatisch korrigiert werden.

Am Beispiel der Sauerstoff-Meßzelle sind die zur Verfügung stehenden Elektrolyt-Werkstoffe aus dotiertem Zirkondioxyd immer noch bruchempfindlich. Auch neigt der Werkstoff bei höher werdenden Temperaturen und niedriger werdendem Sauerstoffpotential zunehmend zur Elektronenteilleitung. Bei Bruch, des die Atmosphäre vom Referenzmittel trennenden Festelektrolyten, treten Meßfehler auf, die bei der konventionellen Bauweise der Meßzellen während des Betriebs nicht festgestellt werden können. Bei der neuen Meßzelle erfolgt die Trennung von Referenzluft und Atmosphäre sicher mit hitzebeständigem Baustahl. Weiterhin kommen Elektrolyt-Tabletten zur Anwendung, die nicht dicht gesintert sein müssen. Auch beeinflußt ein Riß im Elektrolyten die Genauigkeit der Meßzelle nicht, da an allen Stellen der Elektrolyt-Tablette der gleiche Sauerstoffteildruck herrscht. Die Elektronenteilleitfähigkeit des Elektrolytwerkstoffes kann wesentlich höher sein als bei den bekannten Meßzellen, da an den metallischen Berührungsstellen der Elektrolyte (4) und (7) nur sehr geringe elektrische Potentialunterschiede auftreten.

Die Werkstoffe einer Festelektrolyt-Meßzelle können sich in der Übertragungsatmosphäre im Laufe der Zeit verändern. Die Folge davon sind Thermospannungen oder sonstige Fehlspannungen, die sich dem Meßwert überlagern. Bei der konventionellen Bauweise der Meßzellen lassen sich solche Fehler während des Betriebes nicht feststellen. Bei der neuen Meßzelle heben sich durch Werkstoffveranderüngen bewirkte Thermospannungen zum Teil auf. Zur Sicherheit können Thermospannungen und sonstige Fehlspannungen in einer kurzen Betriebspause zwischen den aus dem Ofenraum führenden elektrischen Leitungen (6), (12), (11) und (13) separat gemessen werden. Gegebenenfalls läßt sich der Meßwert einer Zelle -auch automatisch- berichtigen.

Die geringeren Ansprüche an den Festelektrolyt-Werkstoff und die Korrekturmöglichkeit von werkstoffbedingten Fehlspannungen verleihen der neuen Bauform der Meßzelle eine erheblich längere Haltedauer und eine viel größere Sicherheit gegen Meßfehler, als dies mit der konventionellen Bauform möglich ist.

Außerdem erleichtern die wesentlich geringeren Anforderungen an die Elehtrolytqualität das Anwenden und Entwickeln neuer Festelektrolytwerkstoffe erheblich. Lt. Literatur gibt es einen Stickstoffionen leitenden Festelektrolyt auf AlN-Basis, der jedoch bei der seitherigen Qualitätsanforderung wegen zu hoher Elektronenteilleitfähigkeit noch nicht eingesetzt werden kann.

Die Erfindung wird -bezüglich der Messung der Übertragungsgeschwindigkeit- an drei Beispielen erläutert:

Das erste Beispiel betrifft eine Anwendungsweise bei der lediglich optimale Stoffübertragungsbedingungen gesucht werden. Diese beziehen sich auf die Gleichmäßigkeit der Schichtbildung und einen geringen Gasverbrauch zur Herstellung der Atmosphäre. Zum Auffinden. Aufrechterhalten bzw. gelegentlichen Überprüfen der bestgeeigneten Gasmengen dient der Maximalwert des die Übertragungsgeschwindigkeit kennzeichnenden $\mu A$-Wertes.

Bei einer Aufkohlungsatmosphäre (C-Pegel 1,1%) wird die günstigste dem Ofenraum zugeführte Erdgasmenge gesucht. Es ergaben sich bei der Erprobung mit verschiedenen Erdgasmengen folgende $\mu A$-Werte:

Bei 1 $m^3/h$ 180 $\mu A$; bei 1,2 $m^3/h$ 185 $\mu A$; bei 1,4 $m^3/h$ 175 $\mu A$.

Bei etwa 1,2 $m^3/h$ lag die günstigste Erdgasmenge.

Die absolute Höhe des $\mu A$-Wertes spielt beim Auffinden des Maximalwertes keine Rolle. Eine Justierung oder Eichung des $\mu A$-Wertes ist hierzu nicht erforderlich.

Auf dieselbe Weise kann beim Nitrieren oder- Nitrocarburieren die optimale $NH_3$-Menge oder die der Zusatzgase $CO_2$, $N_2O$, Luft oder $O_2$ bestimmt werden.

An einem zweiten Beispiel wird die automatische Justierung einer Meßzelle für die Übertragungsgeschwindigkeit erläutert. Damit lassen sich reproduzierbare Übertragungswerte der Atmosphäre erzielen. Dies dürfte der wichtigste Anwendungszweck sein. Zur Justierung des Stromflusses einer Meßzelle dient eine konstante Justierspannungsquelle in der Größenordnung von 30 - 50 mV. Bei der neuen Bauweise der Meßzelle wird diese anstelle der Triebspannungsquelle (14) und der Widerstände (15)(16) angelegt; bei der konventionellen Bauweise wird die Justierspannungsquelle an den Elektroden (1) und (5) angelegt. Die Elektrolyte (4) und (7) mit den Elektroden (1) und (5) werden belüftet. Bei der Betriebstemperatur des Ofens betrug der Stromfluß 320 $\mu A$. Unter Übertragungsbedingungen (Elektrolyt (4) und Elektrode (5) mit der Atmosphäre in Berührung) betrug der Meßwert mit der Triebspannungsquelle 164 $\mu A$. Bei einer späteren Nachjustierung wurden unter Justierbedingungen 334 $\mu A$ und als aktueller Wert in der Atmosphäre 168 $\mu A$ gemessen. Der berichtigte Meßwert beträgt 168 * 320/334 = 161 $\mu A$. Das sind 161/164 = 98% der bei der Erstjustierung herrschendenden Übertragungsgeschwindigkeit.

In einem dritten Beispiel wird eine Eichung des justierten Meßwertes mit kurzzeitig aufgekohlten Folien erläutert.

Nach Literaturangaben beträgt die auf den C-Pegel $C_P$ und den Randkohlenstoffgehalt $C_R$ bezogene C-Übertragungsgeschwindigkeit v an den nicht aufkohlenden Edelmetallelektroden:

$$v = v_0/C_p^{\ n} * (C_p - C_R)^n \qquad [gC/(cm^2 * s)]$$

Hierbei ist $v_0$ die Anfangs-Aufkohlungsgeschwindigkeit bei $C_R=0$.

Mit Hilfe kurzzeitig aufgekohlter Folien läßt sich die Anfangs-Aufkohlungsgeschwindigkeit bei der Eichung $v_{0[Eich]}$ und die Reaktionsordnung n berechnen. Für 1 und 3 min. aufgekohlte 0,05 mm dicke Folien gilt:

$$n = \frac{\ln (\%C_1 - \%C_0) - \ln ((\%C_3 - \%C_1)/2)}{\ln (C_p - (\%C_0 + (.56*(\%C_1 - \%C_o)))) - \ln (C_p - (\%C_1 + (.618*(\%C_3 - \%C_1))))}$$

$$v_{0[Eich]} = \frac{(\%C_1 - \%C_0) * 3{,}25*10^{-6}}{(C_p - (0{,}56*(\%C_1 - \%C_0)))^n} \qquad [gC/(cm^2{*}s)]$$

Bei einer Aufkohlungsatmosphäre aus Erdgas+Luft liegen folgende Meßwerte vor [siehe Zeitschrift HTM 43 (1986) 4 S. 204]: $\%C_0 = 0.1$      $\%C_1 = 0{,}421$      $\%C_3 = 0{,}911$      $C_p = 1{,}15\%C$ Mit diesen Werten errechnet sich $n = 0{,}378$ und

$$v_{0[Eich]} = 1{,}055*10^{-6} \qquad [gC/(cm^2{*}s)]$$

Prinzipiell sind zwei Eichungen bei unterschiedlichen Übertragungsgeschwindigkeiten erforderlich. Der Einfachheit halber wird ein linearer Zusammenhang zwischen $v_0$ und µA-Messung angenommen:

$$v_0 = \frac{v_{0[Eich]} * \mu A\text{-Atm.}_{[aktuell]} * \mu A\text{-Luft}_{[Eichjustierung]}}{\mu A\text{-Atm.}_{[Eichung]} * \mu A\text{-Luft}_{[Nachjustierung]}}$$

Der bei der Aufkohlung herrschende aktuelle Stromfluß betrug 165 µA. Bei der Eichung war der Stromfluß in der Atmosphäre 188 µA und der Justierwert mit Luft 365 µA. Der letzte Nachjustierwert mit Luft lag bei 388 µA. Der aktuelle $v_0$-Wert beträgt damit:

$$v_0 = \frac{1{,}055*10^{-6} * 165 * 365}{188 * 388} = 8{.}71*10^{-7} \qquad [gC/(cm^2{*}s)]$$

Während der Aufkohlung mit einem C-Pegel $C_p = 1{,}15\%C$ beträgt somit die übertragene C-Menge:

$$v = 8{,}71*10^{-7}/1{,}15^{0{,}378} * (1{,}15 - C_R)^{0{,}378} \qquad [gC/(cm^2{*}s)]$$

$$= 8{,}26*10^{-7} * (1{,}15 - C_R)^{0{,}378} \qquad [gC/(cm^2{*}s)] \text{ bzw.}$$

$$1{,}05*10^{-5} * (1{,}15 - C_R)^{0{,}378} \qquad [\%C{*}cm/s].$$

Damit läßt sich während des Aufkohlungsvorganges die übertragene C-Menge in Abhängigkeit vom Rand-C-Gehalt berechnen. Herrscht beispielsweise ein Rand-C-Gehalt von $C_R = 1{,}02\%$, beträgt diese: $v_{[1.02]} = 3{,}82*10^{-7} [gC/(cm^2{*}s)]$ bzw. auf $(C_p - C_R)$ bezogen: $\beta_{[1.02]} = 2{.}94*10^{-6} [gC/(cm^2{*}s\%C)]$      bzw. $3{,}74*10^{-5} [cm/s]$.

Bei Atmosphären mit niedrigen Übertragungsgeschwindigkeiten kann die $v_0$-Ermittlung mit Folien von den Werten bei dickeren Werkstücken abweichen. Dann rnuß ein Plättchen der aufzukohlenden Stahlsorte ca 1 Std. aufgekohlt und durch Wägung die übertragene C-Menge ermittelt werden. Hieraus kann man mit Hilfe einer Computer-Simulationsrechnung die bei Aufkohlungsbeginn herrschende Eich-Übertragungsgeschwindigkeit $v_{0[Eich]}$ ermitteln.

Besonders vorteilhaft ist nachstehend beschriebene Regelung der C-Übertragungsgeschwindigkeit bei Aufkohlungsatmosphären aus direkt in den Ofenraum eingeführten Brennstoff-Luftgemischen:

Bei geringen Sollwertabweichungen wird nur die eingeführte Brennstoffmenge verändert;
bei stärkerem Absinken der Übertragungswerte erfolgt kurzzeitig eine zusätzliche Zufuhr von $O_2$.

Die Zufuhr von $O_2$ erhöht sowohl die Reaktionsgeschwindigkeit des Brennstoffes als auch den CO-Gehalt der Atmosphäre. Beides bewirkt bei gleichem Brennstoffverbrauch eine erhöhte C-Übertragungsgeschwindigkeit. Dadurch verkürzen sich die Aufkohlungszeiten und eine Rußabscheidung im Ofenraum wird verhindert. Eine verbesserte Ausnutzung der Ofenanlage bringt höhere Energie- und Kosteneinsparungen, als der dazu notwendige Aufwand für $O_2$.

Bei der Regelung der N-Übertragungsgeschwindigkeit treten höhere Werte ein, wenn zum Ammoniak folgen-

de Gase zugegeben werden:

$CO_2$ bei gleichzeitiger Erhöhung des C- und O- Anteils der Verbindungsschicht an der Werkstückoberfläche;
Luft, $O_2$ oder $N_2O$, bei Erhöhung nur des O-Anteils.

In Nitrieratmosphären hat die Übertragungsgeschwindigkeit einen stärkeren Einfluß als die gemessenen N-Konzentrationen. In der-Praxis bringt die Anwendung der Erfindung eine Verbesserung der Wiederholbarkeit der Eigenschaften der Verbindungsschicht von Charge zu Charge. Dies bezieht sich auf deren gleichmäßige Dicke an allen Stellen des Werkstücke und deren Porenanteil.

Die Erfindung eignet sich auch zur Erzeugung von Oxydschichten bestimmter Dicke an der Werkstückoberfläche, insbesondere in unmittelbarem Anschluß an eine Nitrocarburierbehandlung. Im Ofenraum wird die Nitrieratmosphäre durch eine oxydierende Atmosphäre -z.B. $N_2$+Luft- verdrängt. Mit einer Sauerstoffmeßzelle wird das jeweilige Sauerstoffpotential und die Sauerstoff-Übertragungsgeschwindigkeit der Atmosphäre erfaßt. Die Regeleinrichtung beendet die oxydierende Behandlung, wenn die aus diesen Werten berechnete Dicke der Oxydschicht dem Sollwert entspricht.

Bei einer konventionellen Sauerstoff-Meßzelle kann bei offenem Stromkreis ein ständiger Ionenstrom vom Referenzmittel zur Atmosphäre auftreten. Die Erfindung vermeidet hierbei auftretende Meßfehler. Außerdem bietet sie erstmals eine kontinuierliche Meßgröße für die Übertragungsgeschwindigkeit einer Atmosphäre. Ihre Fortschrittlichkeit liegt z. Zt. in einer verbesserten Gleichmäßigkeit und Berechenbarkeit der Aufkohlungswirkung aller über das Sauerstoffpotential regelbaren $CH_4$-haltigen Aufkohlungsatmosphären. Auch kann die übertragunggeschwindigkeit sauerstoffhaltiger Nitrieratmosphären auf den maximal erzielbaren Wert geregelt werden. Das führt bei unterschiedlicher Gas-Anströmung der Werkstücke zu einer gleichmäßigen Schichtdicke.

Die neue Meßzelle mit zwei Elektrolyt-Tabletten vermeidet außerdem seitherige Meßfehler durch Elektrolytbruch und Fehlspannungen durch Baustoff-Veränderung. Sie arbeitet anstelle der üblichen chemischen mit einer elektrischen Triebkraft, die den Hauptteil der Meßspannung aufbringt. An den Elektrolyten liegen nur kleine Potentialdifferenzen an, die auch bei erhöhter Elektronenteilleitfähigkeit der Elektrolyte keinen ständigen Ionenstrom auslösen, der einen Meßfehler zur Folge hätte. Außerdem braucht der Elektrolyt nicht im Meßmedium und im Referenzmittel eine geringe Elektronenteilleitfähigkeit aufweisen. Es genügt, wenn das in einem der beiden Medien der Fall ist.
Eine solche Meßzelle stellt nur geringe Anforderungen an die Elektrolyt-Qualität. Bei Anwendung von gegebenenfalls zwei verschiedenen Ionenleitern sind Meßzellen für N- und C-Potentiale zu erwarten. Damit ließen sich auch sauerstoffreie Atmosphären beim -Nitrieren nur mit $NH_3$- oder beim -Aufkohlen nur mit Kohlenwasserstoffen- regeln. Letzteres schafft durch Messen und Regeln des C-Pegels -z.B. beim Aufkohlen mit Plasmaunterstützung- u.a. folgende neue Möglichkeiten: Beim Aufhohlvorgang können an der gesamten Werkstüchoberfläche (auch an Kanten und Spitzen) Carbide verhindert werden. Außerdem ist eine geregelte abkohlende Diffusion mit $H_2$ möglich, die bei verkürzter Diffusiosdauer zu dem bei größerer Einsatz tiefe gewünschten waagerechten Teil des C-Verlaufs in der aufgekohlten Schicht führt.

Die erfindungsgeniäße Meßzelle verbessert grundsätzlich die Meßgenauigkeit in Stahilschmelzen und bei der Hochtemperatur-Aufkohlung. Bei den notwendigen hohen Temperaturen liegt bei allen bekannten Elektrolytsorten eine das Meßergebnis beeinflussende Elektronenteilleitfähigkeit vor.

**Patentansprüche**

1.  Vorrichtung zur Messung und Regelung der Konzentration fester oder flüssiger Stoffe und/oder der Übertragungseigenschaften einer Aufkohlungs- und/oder Nitrieratmosphäre zur Erzielung eines bestimmten Konzentrationsverlaufes des übertragenen Elements in der Randschicht metallischer Werkstücke durch angepaßte Zufuhr von Kohlenwasserstoff, Luft, $O_2$, $CO_2$, $N_2O$, $N_2$ oder $NH_3$ in einen Ofenraum, wobei die zugeführte Menge eines oder mehrerer dieser Gase durch eine elektrische Meßgröße bestimmt wird, die zwischen zwei Elektroden (1,5) einer im Ofenraum eingebauten Meßzelle anliegt, wobei die eine Elektrode (1) in einem Referenzmittel und die andere Elektrode (5) in der von dem Referenzmittel getrennten Atmosphäre angeordnet ist und mit einem allseits von der Atmosphäre umgebenen ionenleitenden Festelektrolyten (4) in Berührung steht,
    **dadurch gekennzeichnet,**
    daß die Elektrode (1) im Referenzmittel und jene (5) in der Atmosphäre durch mindestens eine ausschließlich Elektronen leitende Ionensperre (3) miteinander verbunden sind.

2.  Vorrichtung nach Anspruch 1, dadurch gekennzeichnet, daß die im Referenzmittel angeordnete Elektrode (1) mit einem allseits vom Referenzmittel umgebenen ionenleitenden Festelektrolyten (7) in Berührung steht und zwischen diesem und einem die Atmosphäre vom Referenzmittel trennenden Festelektrolyten (2) eine weitere ausschließlich Elektronen leitende lonensperre (16) angeordnet ist.

3. Vorrichtung nach Anspruch 2, gekennzeichnet durch folgenden Aufbau der Meßzelle:

Elektrode (1) im Referenzmittel mit einer Verbindungsleitung (6) zu einem Meßgerät, in Berührung mit

Festelektrolyt (7) allseits vom Referenzmittel umgeben, in Berührung mit

metallischer lonensperre (16) im Referenzmittel in Form einer Blindelektrode, in Berührung mit

Festelektrolyt (2), der die Atmosphäre vom Referenzmittel trennt, in Berührung mit

metallischer lonensperre (3) in der Atmosphäre in Form einer Blindelektrode, in Berührung mit

Festelektrolyt (4) allseits von der Atmosphäre umgeben, in Berührung mit

Elektrode (5) in der Atmosphäre mit einer Verbindungsleitung (11) zum Meßgerät.

4. Vorrichtung nach Anspruch 1, dadurch gekennzeichnet, daß die lonensperre zweiteilig ausgebildet ist und das Referenzmittel und die Atmosphäre voneinander trennt, wobei der eine Teil der lonensperre (10) mit dem allseits von der Atmosphäre umgebenen Festelektrolyten (4) in Berührung steht und der andere Teil der lonensperre (8) mit einem allseits vom Referenzmittel umgebenen Festelektrolyten (7) der Elektrode (1) in Berührung steht und wobei die beiden Teile der lonensperre (8,10) über ein elektrisches Bauteil (9), das Elektronen nur in einer Richtung durchläßt und/oder fördert, miteinander in leitender Verbindung stehen.

5. Vorrichtung nach Anspruch 4, gekennzeichnet durch folgenden Aufbau der Meßzelle:

Elektrode (1) im Referenzmittel mit einer Verbindungsleitung (6) zu einem Meßgerät, in Berührung mit

Festelektrolyt (7) allseits vom Referenzmittel umgeben, in Berührung mit

metallischer lonensperre in Form eines ersten im Ofenraum angeordneten Gehäuses (8), das die Atmosphäre vom Referenzmittel trennt, Elektronen leitend verbunden

über ein Bauteil (9) mit einer zweiten lonensperre in Form eines im Ofenraum angeordneten metallischen Gehäuses (10), in Berührung mit

Festelektrolyt (4) allseits von der Atmosphäre umgeben, in Berührung mit

Elektrode (5) in der Atmosphäre mit einer Verbindungsleitung (11) zum Meßgerät.

6. Vorrichtung nach Anspruch 5, dadurch gekennzeichnet, daß das Bauteil (9) aus einer Gleichspannungsquelle (14) besteht, die durch das Stromnetz gespeist wird.

7. Vorrichtung nach Anspruch 5, dadurch gekennzeichnet, daß das Bauteil (9) aus einer Festkörperelektrolytzelle oder aus einer anderen im elektrochemischen Gleichgewicht befindlichen galvanischen Zelle besteht.

8. Vorrichtung nach Anspruch 5, dadurch gekennzeichnet, daß das Bauteil (9) aus einem elektronischen Baustein, vorzugsweise einer Elektronenröhre, besteht.

9. Vorrichtung nach Anspruch 3 oder 5, dadurch gekennzeichnet, daß die gasberührten Oberflächen der Festelektrolyte (4) und (7) teilweise mit einer elektrisch nichtleitenden Schicht versehen sind.

10. Vorrichtung nach einem der Ansprüche 2 bis 9, dadurch gekennzeichnet, daß die Elektrolyte (4,7) im Referenzmittel und in der Atmosphäre aus Leitern unterschiedlicher lonensorten bestehen.

11. Vorrichtung nach Anspruch 10, dadurch gekennzeichnet, daß ein Stoff an dem sich lonen eines Elements, vorzugsweise Stickstoff- oder Kohlenstoffionen, bilden, als Elektrolyt (4) mit hoher Elektronenleitfähigkeit in der Atmosphäre angeordnet ist und ein anderer ionenleitender Elektrolyt (7) mit geringer Elektronenteilleitfähigkeit im Referenzmittel, vorzugsweise Sauerstoffionenleiter in Luft, angeordnet ist.

12. Vorrichtung nach einem der Ansprüche 1 bis 11, dadurch gekennzeichnet, daß die Meßgröße zur Ermittlung und Regelung der Gleichgewichtskonzentration der Atmosphäre mit den Werkstücken die elektrische Spannung der Meßzelle ist.

13. Vorrichtung nach einem der Ansprüche 1 bis 12, dadurch gekennzeichnet, daß die Meßgröße zur Ermittlung und Regelung der Übertragungsgeschwindigkeit der Atmosphäre auf das Werkstück die Stärke des elektrischen Stromes ist, der zwischen den beiden Elektroden (1,5) der Meßzelle fließt.

14. Vorrichtung nach einem der Ansprüche 1 bis 13, dadurch gekennzeichnet, daß an der Meßzelle eine Spannungsmessung und eine Messung des Stromflusses in zeitlicher Folge vornehmbar ist.

15. Vorrichtung nach einem der Ansprüche 13 oder 14, dadurch gekennzeichnet, daß die auf den Stromfluß einwirkenden Veränderungen der Meßzelle mit Hilfe einer konstanten Justier-Spannungsquelle und reproduzierbarer Justier-Begasungen, vorzugsweise mit Luft, erfaßbar sind, wobei der als Meßwert dienende Stromfluß durch Multiplikation des aktuellen Stromflusses mit einem Faktor ermittelt wird, der sich aus dem Stromfluß bei einer Erst-Justierung dividiert durch den Stromfluß bei einer Nach-Justierung ergibt.

## Claims

1. Device for measuring and controlling the concentration of solid or liquid materials and/or the transfer properties of a carbonising and/or nitriding atmosphere to achieve a certain concentration path for the transferred element in the edge layer of metallic workpieces by adapted supply of hydrocarbon, air, $O_2$, $CO_2$, $N_2O$, $N_2$ or $NH_3$ to a furnace chamber, wherein the quantity of one or more of these gases supplied is determined by an electrical measuring parameter existing between two electrodes (1, 5) of a measuring cell installed in the furnace chamber, wherein the one electrode (1) is arranged in a reference agent and the other electrode (5) in the atmosphere separated from the reference agent, and is in contact with an ion-conducting solid electrolyte (4) surrounded on all sides by the atmosphere,
characterised in that the electrode (1) in the reference agent and that (5) in the atmosphere are connected to one another by at least one ion barrier (3) conducting only electrons.

2. Device according to claim 1, characterised in that the electrode (1) arranged in the reference agent is in contact with an ion-conducting solid electrolyte (7) surrounded on all sides by the reference agent and between the latter and a solid electrolyte (2) separating the atmosphere from the reference agent is arranged a further ion barrier (16) conducting only electrons.

3. Device according to claim 2, characterised by the following construction of the measuring cell:
electrode (1) in the reference agent having a connecting lead (6) to a measuring apparatus, in contact with solid electrolyte (7) surrounded on all sides by the reference agent, in contact with metallic ion barrier (16) in the reference agent in the form of a dummy electrode, in contact with solid electrolyte (2) which separates the atmosphere from the reference agent, in contact with metallic ion barrier (3) in the atmosphere in the form of a dummy electrode, in contact with solid electrolyte (4) surrounded on all sides by the atmosphere, in contact with electrode (5) in the atmosphere having a connecting lead (11) to the measuring apparatus.

4. Device according to claim 1, characterised in that the ion barrier is designed to have two parts and separates the reference agent and the atmosphere from one another, wherein the one part of the ion barrier (10) is in contact with the solid electrolyte (4) surrounded on all sides by the atmosphere and the other part of the ion barrier (8) is in contact with a solid electrolyte (7) of electrode (1) surrounded on all sides by the reference agent, and wherein the two parts of the ion barrier (8, 10) are in conductive contact with one another via an electrical component (9) which passes and/or conveys electrons only in one direction.

5. Device according to claim 4, characterised by the following construction of the measuring cell:
electrode (1) in the reference agent having a connecting lead (6) to a measuring apparatus, in contact with solid electrolyte (7) surrounded on all sides by the reference agent, in contact with metallic ion barrier in the form of a first housing (8) arranged in the furnace chamber which separates the atmosphere from the reference agent, connected to conduct electrons via a component (9) having a second ion barrier in the form of a metallic housing (10) arranged in the furnace chamber, in contact with solid electrolyte (4) surrounded on all sides by the atmosphere, in contact with electrode (5) in the atmosphere having a connecting lead (11) to the measuring apparatus.

6.  Device according to claim 5, characterised in that the component (9) comprises a direct voltage source (14) which is supplied by the mains supply.

7.  Device according to claim 5, characterised in that the component (9) comprises a solid-state electrolyte cell or a further galvanic cell existing in electrochemical equilibrium.

8.  Device according to claim 5, characterised in that the component (9) comprises an electronic component, preferably an electron tube.

9.  Device according to claim 3 or 5, characterised in that the gas-contacted surfaces of the solid electrolyte (4) and (7) are partly provided with an electrically nonconducting layer.

10. Device according to one of claims 2 to 9, characterised in that the electrolyte (4, 7) in the reference agent and in the atmosphere consist of conductors of different type of ions.

11. Device according to claim 10, characterised in that a material on which ions of an element, preferably nitrogen or carbon ions, are formed, is arranged in the atmosphere as electrolyte (4) having high electron conductivity, and a further ion-conducting electrolyte (7) having low electron-part conductivity is arranged in the reference agent, preferably oxygen ion conductor in air.

12. Device according to one of claims 1 to 11, characterised in that the measuring parameter to determine and control the equilibrium concentration of the atmosphere with the workpieces is the electrical voltage of the measuring cell.

13. Device according to one of claims 1 to 12, characterised in that the measuring parameter to determine and control the rate of transfer of the atmosphere to the workpiece is the strength of the electric current which flows between the two electrodes (1, 5) of the measuring cell.

14. Device according to one of claims 1 to 13, characterised in that a voltage measurement and a measurement of current flow can be carried out in chronological sequence at the measuring cell.

15. Device according to one of claims 13 or 14, characterised in that the changes in the measuring cell acting on the current flow can be recorded with the aid of a constant adjusting voltage source and reproducible adjusting gassing, preferably using air, wherein the current flow serving as a measuring value is determined by multiplying the actual current flow by a factor which results from the current flow for a first adjustment divided by the current flow for a later adjustment

**Revendications**

1.  Dispositif destiné à la mesure et au réglage de la concentration de matières solides ou liquides et/ou des propriétés de transfert d'une atmosphère de carburation et/ou de nitruration, dans le but d'obtenir un processus défini de concentration de l'élément transféré dans la couche superficielle de pièces métalliques, par une amenée adaptée d'hydrocarbure, d'air, de $O_2$, de $CO_2$, de $N_2O$, de $N_2$ ou de $NH_3$ dans une enceinte de four, la quantité amenée de l'un ou de plusieurs de ces gaz étant définie par une grandeur de mesure électrique, qui est appliquée entre deux électrodes (1, 5) d'une cellule de mesure disposée dans l'enceinte du four, l'une des électrodes (1) étant disposée dans un agent de référence, et l'autre électrode (5) étant disposée dans l'atmosphère séparée de l'agent de référence et étant en contact avec un électrolyte solide (4) conducteur d'ions entouré de tous côtés par l'atmosphère, caractérisé en ce que l'électrode (1) disposée dans l'agent de référence et celle (5) disposée dans l'atmosphère sont reliées entre elles par au moins un blocage d'ions (3) exclusivement conducteur d'électrons.

2.  Dispositif selon la revendication 1, caractérisé en ce que l'électrode (1) disposée dans l'agent de référence est en contact avec un électrolyte solide (7) conducteur d'ions entouré de tous côté par l'agent de référence, et en ce que, entre celui-ci et un électrolyte solide (2) séparant l'atmosphère de l'agent de référence, est disposé un autre blocage d'ions (16) exclusivement conducteur d'électrons.

3. Dispositif selon la revendication 2, caractérisé par l'agencement suivant de la cellule de mesure :

        une électrode (1) dans l'agent de référence comportant une ligne de liaison (6) vers un appareil de mesure, en contact avec
        un électrolyte solide (7) entouré de tous côtés par l'agent de référence, en contact avec
        un blocage métallique d'ions (16) dans l'agent de référence sous la forme d'une électrode réactive, en contact avec
        un électrolyte solide (2) qui sépare l'atmosphère de l'agent de référence, en contact avec
        un blocage métallique d'ions (3) dans l'atmosphère sous la forme d'une électrode réactive, en contact avec
        un électrolyte solide (4) entouré de tous côtés par l'atmosphère, en contact avec
        une électrode (5) dans l'atmosphère comportant une ligne de liaison (11) vers l'appareil de mesure.

4. Dispositif selon la revendication 1, caractérisé en ce que le blocage d'ions est réalisé en deux parties, et en ce que l'agent de référence et l'atmosphère sont séparés l'un de l'autre, l'une des parties du blocage d'ions (10) étant en contact avec l'électrolyte solide (4) entouré de tous côtés par l'atmosphère, et l'autre partie du blocage d'ions (8) étant en contact avec un électrolyte solide (7) de l'électrode (1) entouré de tous côtés par l'agent de référence, les deux parties du blocage d'ions (8, 10) étant en liaison conductrice entre elles par l'intermédiaire d'un composant électrique (9) qui ne laisse passer et/ou transporte des électrons que dans un seul sens.

5. Dispositif selon la revendication 4, caractérisé par l'agencement suivant de la cellule de mesure :

        une électrode (1) dans l'agent de référence comportant une ligne de liaison (6) vers un appareil de mesure, en contact avec
        un électrolyte solide (7) entouré de tous côtés par l'agent de référence, en contact avec
        un blocage métallique d'ions sous la forme d'un premier boîtier (8) disposé dans l'enceinte du four, qui sépare l'atmosphère de l'agent de référence, relié de façon conductrice d'électrons
        par l'intermédiaire d'un composant (9) à un deuxième blocage d'ions sous la forme d'un boîtier métallique (10) disposé dans l'enceinte du four, en contact avec
        un électrolyte solide (4) entouré de tous côtés par l'atmosphère, en contact avec
        une électrode (5) dans l'atmosphère comportant une ligne de liaison (11) vers l'appareil de mesure.

6. Dispositif selon la revendication 5, caractérisé en ce que le composant (9) est constitué d'une source de tension continue (14) qui est alimentée par le secteur.

7. Dispositif selon la revendication 5, caractérisé en ce que le composant (9) est constitué d'une cellule à électrolyte à corps solide ou d'une autre cellule galvanique se trouvant en équilibre électrochimique.

8. Dispositif selon la revendication 5, caractérisé en ce que le composant (9) est constitué d'un module électronique, de préférence d'un tube électronique.

9. Dispositif selon la revendication 3 ou 5, caractérisé en ce que les surfaces des électrolytes solides (4) et (7) qui sont en contact avec le gaz sont partiellement munies d'une couche électriquement non conductrice.

10. Dispositif selon l'une quelconque des revendications 2 à 9, caractérisé en ce que les électrolytes (4, 7) situés dans l'agent de référence et dans l'atmosphère sont constitués de conducteurs de différents types d'ions.

11. Dispositif selon la revendication 10, caractérisé en ce qu'une matière sur laquelle se forment des ions d'un élément, de préférence des ions azote ou d'hydrocarbure, est disposée dans l'atmosphère en tant qu'électrolyte (4) à haute conductibilité électronique, et en ce qu'un autre électrolyte (7) conducteur d'ions à faible conductibilité électronique partielle, de préférence conducteur d'ions dans l'air, est disposé dans l'agent de référence.

12. Dispositif selon l'une quelconque des revendications 1 à 11, caractérisé en ce que la grandeur de mesure, destinée à la détermination et au réglage de la concentration d'équilibre de l'atmosphère avec les pièces, est la tension électrique de la cellule de mesure.

13. Dispositif selon l'une quelconque des revendications 1 à 12, caractérisé en ce que la grandeur de mesure, destinée à la détermination et au réglage de la vitesse de transfert de l'atmosphère sur la pièce, est l'intensité du courant électrique qui circule entre les deux électrodes (1, 5) de la cellule de mesure.

14. Dispositif selon l'une quelconque des revendications 1 à 13, caractérisé en ce qu'une mesure de tension et une mesure du flux de courant peuvent être effectuées dans un ordre chronologique au niveau de la cellule de mesure.

15. Dispositif selon l'une des revendications 13 ou 14, caractérisé en ce que les variations de la cellule de mesure agissant sur le flux de courant peuvent être détectées à l'aide d'une source de tension d'ajustement constante et d'injections reproductibles de gaz d'ajustement, de préférence d'air, le flux de courant servant de valeur de mesure étant déterminé par multiplication du flux réel de courant par un facteur qui résulte du flux de courant lors d'un premier ajustement, divisé par le flux de courant lors d'un réajustement.

Fig. 1

Referenz                                    Atmosphäre

$O^{--}$ ⇒

1          2          3     4     5

Fig. 2

6                    12   13                      11

+     e     -

Referenzmittel                                Atmosphäre

1     7     8     9     10    4     5

Fig. 3

Referenzmittel

Luft

Ofenraum

1

7

16

2

3

4

5

Fig. 4

Referenzmittel

Luft

Ofenraum

+ −

11

6

12 + − 13

galv. Zelle

9

8

1

7

10

5

4

Spannungs-oder Strommeßgerät

## Fig. 5

15

16

6

14

11

e

Referenzmittel

12

13

Luft

Ofenraum

Atmosphäre

8

10

1

5

7

4

# Fig. 6

Meßzelle nach Anspruch 9

Referenzmittel | Atmosphäre

# Fig. 7

Meßzelle nach Anspruch 12

# Fig. 8

**Meßzelle nach Anspruch 14**